# EUROPEAN PATENT SPECIFICATION

(11) **EP 0 353 642 B1**
(45) Date of publication and mention of the grant of the patent: **03.11.1993**
(21) Application number: 89113922.2
(22) Date of filing: 28.07.1989
(51) Int. Cl.: A47J 37/07, A47J 37/06

(54) **Apparatus for grill-cooking of foods, particularly meats, fish and the like**
Vorrichtung zum Grillieren von Nahrungsmitteln, z.B. Fleisch, Fisch und dgl.
Appareil pour griller des aliments, notamment de la viande, des poissons, etc.

(30) Priority: 02.08.1988 IT 4575388
(43) Date of publication of application: 07.02.1990
(73) Proprietor: Turcolin, Michele, S. Stino di Livenza (VE) (IT)
(72) Inventor: Turcolin, Michele, S. Stino di Livenza (VE) (IT)

(56) References cited:
- AU-B- 444 658
- US-A- 3 809 053
- US-A- 4 479 422
- US-A- 4 492 152

## Description

The invention relates to an apparatus for grill-cooking of foods, particularly meats, fish and the like, which is provided with a simple device for tipping over the foods adapted to permit the cooking thereof on both their main surfaces.

From US 4,492,152 is known a portable grill for cooking foods over any suitable heat source, such as a charcoal pit, fireplace, etc., said portable grill comprising two grates secured together along one edge for relative pivotal movement by a pair of hinges and also comprising a frame work, provided with four legs for supporting the two grates over the heat source and with elongated end bars to which respective handles are secured, which can be grasped for lifting the portable grill and moving it from one location to the next.

The portable grill also comprised a further handle secured to one end of a S-shaped rod, provided with an elongate section slidable into tubular members secured to the edge of one of both grates, opposite to the hinges.

In turn, the elongate rod section has a locking member provided with fingers co-operating with a correspondent tubular member secured to the edge of the other grate, so that, by manipulating the further handle to effect axial movement of the elongate rod section, it is possible to move such rod section from a position in which the fingers do not engage the tubular member and the grates aren't locked together, to a position in which the fingers engage the tubular member and the grates are locked together.

In particular, when both grates aren't locked together, a grate can be initially separated from the other one, by pivoting it about the hinges, thus permitting the foods to be cooked to be disposed between both grates, and then such grate is pivoted back toward the other grate, until it rests on the foods and finally both grates are secured together by the movement of the elongate rod section toward the locked condition of both grates.

Finally, the portable grill also comprises a mechanism for tipping over both grates, together with the foods enclosed therebetween, so as the foods may be cooked at both sides thereof, such mechanism including a pair of L-shaped members for defining channels on either side of the framework, in which penetrate correspondent tubular sleeves secured laterally to one grate, which grate is also provided laterally with posts slidable into the correspondent channels, said tubular sleeves being coupled to the framework respectively by a pivot arm and an additional tubular sleeve.

In this manner, both grates and the foods enclosed therebetween are tipped over by moving the further handle through an arc at 180° , and during such movement the tubular sleeves of the grate are lifted out of channels and then lowered, by bringing them back into engagement with the channels, while the posts by sliding horizontally into the corresponding channels are moved from an end of the channels to the opposite end thereof.

However, this portable grill has the disadvantage that the fat substances dripping from the foods being cooked drop directly on the surface where the grill is disposed and soil it.

From US 3,809,053 is known a cooking apparatus for cooking foods, comprising a box-like casing supported by removable legs and acting as a structure for supporting a grate and the combustible material, as well as a spit provided with a handle and driven in rotation by an electric motor, which may be fed by or from existing network, by drycells or other form of energy supply.

The grate is supported by flanges joined to the box-like casing and disposed over the combustible material, so that the foods which are disposed on the grate may be cooked by the flame generated by the combustion of such combustible material.

In this case, the fat substances dripping from the foods being cooked are collected on the box-like casing and do not drop on the surface where the cooking apparatus is disposed.

However, since the foods disposed on the grate must be tipped over from time to time for permitting also the remaining surfaces thereof to be cooked, it may happen that in case in which the cooking state of the foods hasn't been carefully watched, the foods result to be more or less burnt and/or stuck to the grate, with consequent difficult detaching thereof from such grate for the requested tipping over thereof by the operator and sometimes even with loss of their natural flavour.

The invention intends to overcome the above described inconveniences, by means of an apparatus of simple kind for grill-cooking of foods, which permits to effect tipping over thereof in a manner different than those previously described, by acting directly on the same apparatus,

The apparatus referred to is based upon the art represented by US 4,492,152 (which forms the basis of the preamble of the claim) and has the characteristics described on the characterizing part of this claim.

The invention will be better understood from the following description thereof, by way of a non-limitative example only and with reference to the following drawings in which:
- fig. 1 shows a perspective view of the apparatus according to the invention, actuated in an operative position thereof in which the foods are cooked at a single surface thereof only;
- fig. 2 shows a perspective view of an item of the apparatus of fig.1, in a position thereof in which the foods are tipped over;
- fig. 3 shows a perspective view of an item of the apparatus of fig.1, in an operative position thereof in which the foods are completely tipped over and cooked at the other surface thereof;
With reference to the fig. 1, it is shown an apparatus for grill-cooking of foods, according to the invention, in particular meats, fish and the like, obtained according to a first possible embodiment thereof.

Such an apparatus substantially comprises a metallic box-like casing 4 open at its upper side and constituting a barbecue, adapted a be installed on fixed positions or for portable use thereof.

In particular, such box-like casing is so bent as to form a flat box-like portion 5 and an inclined box-like portion 6, which are connected together, from which the flat portion 5 is open at its front side and is adapted to collect the glowing fire required for cooking the foods, which glowing fire is produced by the combustion of the fuel substances commonly used for this kind of cooking,as i.e. coal, woods, peat etc., which substances to this purpose are introduced into a proper metallic grate 7 provided above the inclined box-like portion 6 and are lifted therein.

In addition, such flat portion 5 is adapted to collect the fat substances dripping from the foods being cooked.

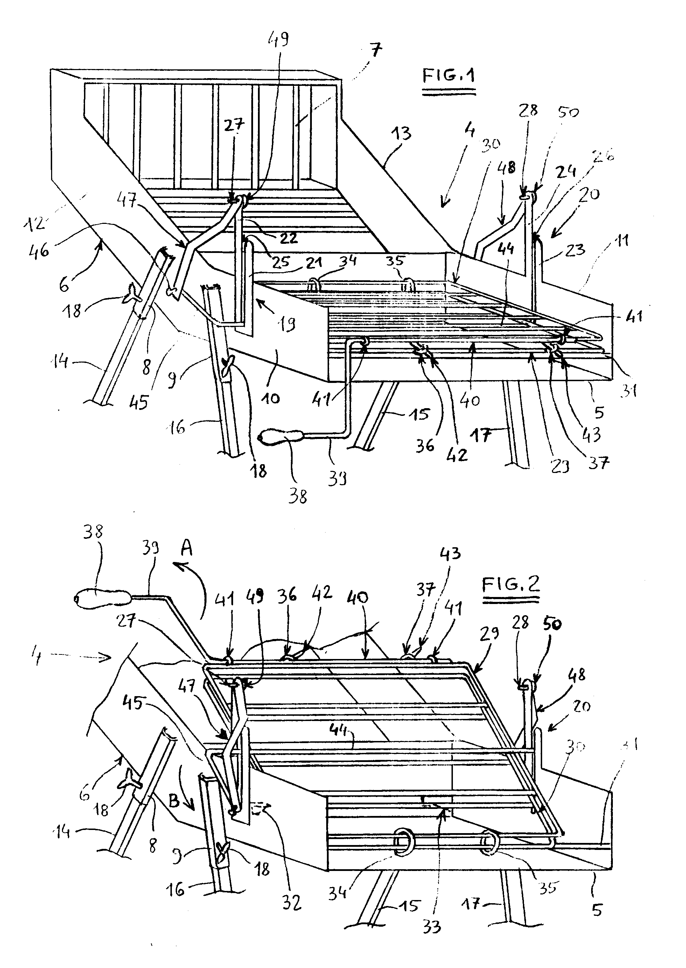

Besides, the so obtained box-like casing is normally provided with two pairs of indentic housings 8,9 (in the figure 1 it is shown a single pair of housings), which are fixed outside against the associated lateral sides 10,11 and 12,13 of flat portion 5 and the inclined portion 6 of the same casing.

In particular, the housings 8,9 of each pair are disposed at a reciprocally inclined position, divergent towards the bottom of the box-like casing 4, in such a way as to permit respective metallic legs 14,15,16,17 of adequate to lenght to be inserted into the same housings, which legs are able to provide for the support of the apparatus referred to on the ground.

Moreover, such legs may be stopped in a position in which they are inserted into the described housings, by means of proper screw clamps 18 or similar devices which are tighten to said legs, and may be extracted from the same housings again by unloosing the screw clamps 18.

In turn, the flat box-like portion 5 is provided with two rectilinear support forks 19 and 20 equal to each other, vertically fitted at reciprocally corresponding positions on the lateral sides 10 and 11 of the same portion.

In particular, the forks 19 and 20 are constituted by respective elements 21,22 and 23,24 which are parallel and slightly spaced between them, in such a way as to form a correspondent vertical slot 25 and 26.

The pairs of elements 21 and 23, also, have the same lenght of and are shorter than the remaining pair of elements 22 and 24, also having reciprocally the same lenght.

Finally, each of the longer elements 22 and 24 of the above forks is provided at its free end with a suitable joint stud, respectively 27 and 28, whose function will be described hereinafter, each stud being constituted i.e. by a bolt or the like which is welded or fixed in another suitable way to the associated element of the fork and also is turned outwards with respect to the box-like casing 4.

In addition, the considered box-like casing is provided with at least two conventional metallic grates 29 and 30, preferably of rectangular shape and adapted to support the foods to be cooked as well as dimensioned in such a manner as to be adapted perfectly on the the flat box-like portion 5 and to be supported horizontally thereon, by means of a metallic bar 31 connected at the front side of said flat portion, between the lateral sides 10,11 thereof, and of two metallic supports 32 and 33 connected to such lateral sides, at the back side thereof.

The grates 29 and 30 are reciprocally hinged connected, along the longitudinal back adge thereof, either by means of metallic slots 34 and 35 connected to the grate 29, or by means of hinges or the like, so as to be able to be reciprocally moved away or superimposed, at the required distance, at the level of their front longitudinal edge, thus permitting the foods to be introduced into or extracted from the same grates.

In particular, in the fig. 1 it is noted that the grate 29 is disposed below the grate 30 and is resting directly on the above described strip 31 and supports 32 and 33; it is also provided with metallic eyelets 36 and 37 or the like, which are fitted along the front longitudinal edge of the same grate for permitting the other grate 30 to be connected thereto in the manner hereinafter described.

In turn, the grate 30 is provided with at least a handle 38 made of suitable insulating material (for instance wood) and is able to provide for shifting the same grate, said handle being connected to a two-folded metallic wire 39 provided with an extended rectilinear portion 40, which can be introduced into corresponding metallic eyelets 41 fixed along the front longitudinal edge of the same grate.

In addition, parts of short metallic wires 42 and 43, inclined with respect to the extended portion 40 are welded or connected in other suitable ways,thereto, in such positions as to permit a limited longitudinal sliding of the extended portion 40 through the associated eyelets 41, however without permitting the same portion to be extracted therefrom and furthermore allowing the reciprocal engagement of said parts of wires 42 and 43 to the associated eyelets 36 and 37 of the other grate 29, when both the grates 29 and 30 are superimposed between them.

By examining the grate 29 again, it is noted that the one of the longitudinal metallic wires forming thereof is longer than the other metallic wires of said grate.

In particular, such metallic wire 44 is provided at the midpoints of the lateral edges of the grate 29 and projects with a rectilinear part from both such lateral edges (in the fig. 1 it is shown the rectilinear part 45 only), which part is inserted through the associated vertical slots 25 and 26 of the above described fork elements 19 and 20.

In turn, each of such rectilinear parts is two-folded orthogonally along the same plane and at its free end forms a stud 46 on which the end of an associated rigid metallic arm 47,48 is joined, whose other end in turn is joined to the associated stud 27,28 of the fork elements 19 and 20.

Further, in the present case since each stud 27,28 is formed by a threaded bolt, as previously described, it follows that any extraction of each arm from the associated bolt is prevented by using a suitable catch device, formed for instance by an associated wing nut 49,50, which is screwed on the corresponding bolt and tightened against the associated arm.

Such arms, which are identical between them, are each two-folded with adequate slants outwards the box-like casing 4, in order that the two ends of each arm could be correctly joined to the associated studs, which in turn are disposed on two different vertical planes.

In this way, it is obtained a mechanism for actuating the grates 29 and 30 which is constituted by two pairs of connecting rods (arms 47 and 48) and of cranks (rectilinear parts 45), which mechanism is able to determine rapidly and easily the tipping over of the same grates, together with the foods enclosed therebetween, in the manner hereinafter described.

To this aim, the introduction of the foods between the grates 29 and 30 is effected by firstly putting the grate 29 on the box-like casing 4, as previously described, and then by lifting the grate 30 from the grate 29 while rotating it about the hinging zone of the same grates, so that the foods can thus be laid and disposed at will on the underlying grate 29.

Thereafter, the grate 30 is lowered and superimposed on the grate 29, thus enclosing the foods between these two grates, and the handle 38 is slightly displaced in the longitudinal direction, so as the parts of metallic wires 42 and 43 of the grate 30 engage the corresponding eyelets 36 and 37 of the grate 29.

In this position, evident in fig. 1, then the ccoking of the foods may be carried out on a surface thereof, while the handle because of being engaged to both the grates 29 and 30 is able to determine the shifting and tipping over of the same grates and of the foods enclosed therebetween.

In the fig. 2, in particular, there are shown the two grates 29 and 30 during the tipping over step, in which the handle 38 is actuated in the direction indicated by the arrow A, thus obtaining the contemporaneous raising of both grates.

In such case, this displacement of both grates 29 and 30 causes also a limited shifting upwards of the rectilinear parts 45 of the wire 44 of the grate 29, along the associated vertical slots 25 and 26 of the fork elements 19 and 20.

Likewise, the consequent raising of the studs 46 of such rectilinear parts 45 causes also a limited oscillation of the arms 47,48 around the associated studs 27,28, in the direction B which is opposite to the displacement direction A of the grates 29 and 30 and of the handle 38.

In the figure it is further noted that each of the arms 47,48 is almost superimposed on the corresponding rectilinear part 45 of the wire 44.

By pursuing the displacement of the handle 38 and of the grates 29 and 30 in the direction A, then, the studs 46 are lowered together with the rectilinear parts 45 slidable along the associated vertical slots 25 and 26 of the fork elements 19 and 20, as long as at the end of this tipping over operation such studs and rectilinear parts are fully lowered.

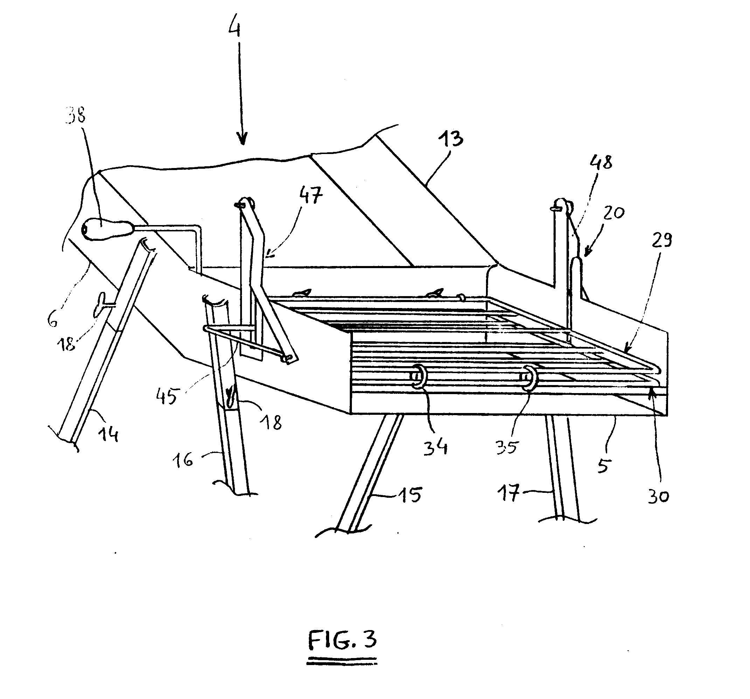

In this position evident in the fig.3, then, the grates 29 and 30 and the foods enclosed therebetween are tipped over by 180°, while the handle 38 and the arms 47,48 are shifted in a position which is opposite than the preceding position of fig. 1.

Consequently in this tipped over position the foods may be cooked also on other surfaces thereof.

Then, operating steps in an inverse sense to that described are performed for extracting the foods from the grates 29 and 30.

Therefore, the thus obtained apparatus permits to effect the tipping over of the foods in a simple way, by avoiding any hazard of burns for the user, which in such case will act exclusively on the handle 38.

In addition, this apparatus makes it possible to obtain a satisfactory cooking of the foods, thanks to the fact that the same foods may be frequently tipped over without excessive difficulties.

Finally, also the inspection of the cooking state of the foods is made easier, thus preventing any burning or incrustation of the same foods on the grates.

## Claims

1. Apparatus for grill-cooking of foods, in particular of meats, fishes and the like, comprising at least a metallic grate (29) adaptable within a correspondent box-like casing (4) open at its upper side, and comprising an additional metallic grate (30) adaptable and hinged to said grate (29) along the back longitudinal edge thereof, by means of metallic slots (34,35) connected to said grate (29) or by means of hinges or the like, in a manner that the foods to be cooked are enclosed between said grate (29) and said additional grate (30), the latter being provided with at least, a handle (38) connected to a metallic wire (39) provided with an extended rectilinear portion (40), insertable into corresponding metallic eyelets (41) fitted along the front longitudinal edge of said additional grate (30), said extended rectilinear portion (40) being provided with parts of metallic wire (42,43) adapted to reciprocally engage metallic eyelets (36,37) provided along the front longitudinal edge of said grate (29), in the position in which said additional grate (30) is superimposed on said grate (29), said grate (29) being also provided with a longitudinal metallic wire (44) fixed to the midpoints of the lateral edges thereof, characterized by two support forks (19,20) fitted on the lateral sides of said box-like casing (4) for supporting both grates (29,30), said support forks (19, for supporting both grates (29,30), said support forks (19, 20) respectively comprising a longer fork element (22,24) parallel and slightly spaced from a shorter fork element (21,23), so as to form correspondent vertical slots (25,26), and by a pair of metallic arms (47,48) respectively joined at their one end to the respective free end of said longer fork elements (22,24), for tipping over both grates (29,30) and the foods enclosed therebetween when the handle (38) is rotated and at their other end joined with said longitudinal metallic wire (44), which projects from the lateral edges of grate (23) through said vertical slots (25,26) of the forks (19,20).

## Patentansprüche

1. Vorrichtung zum Grillieren von Nahrungsmitteln, z.B. Fleisch, Fisch und dgl., umfassend mindestens einen an einem entsprechenden bei ihrem Oberseite geöffneten kastenförmigen Mantel (4) anpassenden metallischen Rost (29), und umfassend einen an solchem Rost (29) anpassenden zusätzlichen metallischen Rost (30), der an solchem Rost (29) entlang seinem rückwärtigen Längskante entweder durch mit solchem Rost (29) verbundene metallische Langlöcher (34, 35) oder Gelenke oder dgl. angelenkt ist, derart dass die zu kochenden Nahrungsmittel zwischen solchem Rost (29) und solchem zusätzlichen Rost (30) eingeschlossen sind, wobei dieser letzter mit mindestens einem Handgriff (38) versehen ist, der mit einem mit einem verlängerten geradlinigen Teil (40) versehenen metallischen Draht (39) verbunden ist, welcher Teil in entsprechenden entlang der longitudinalen Vorderkante solches zusätzlichen Rostes (30) befestigten metallischen Ösen (41) einsetzbar ist, wobei solcher verlängerter geradliniger Teil (40) mit Stücken von metallischem Draht (42, 43) versehen sind, die geeignet sind mit den entlang der longitudinalen Vorderkante solches Rostes (29) vorgesehenen metallischen Ösen (36, 37) gegenseitig sich einzugreifen, bei der Lage wo solcher zusätzliche Rost (30) auf solchem Rost (29) überlagert ist, wobei solcher Rost (29) auch mit einem metallischen Längsdraht (44) versehen ist, der an den Mitten seiner seitlichen Kanten befestigt ist, gekennzeichnet durch zwei beide Roste (29, 30) tragende, an seitlichen Seiten solches kastenförmigen Mantels (4) befestigten Trägegabel (19, 20), wobei solche Trägegabel (19, 20) umfassen jeweils ein längeren Gabelelement (22, 24), das zum einen kürzeren Gabelelement (21, 23) parallel und leicht beabstandet ist, um eine entsprechende senkrechte Nut (25, 26) zu bilden, und durch ein Paar von metallischen Armen (47, 48), die jeweils mit deren eines Endes mit dem entsprechenden freien Ende solcher längeren Gabelelementen (22, 24) verbunden sind, um beide Roste (29, 30) und den dazwischen eingeschlossenen Lebensmitteln zu kippen, wenn der Handgriff (38) umgedreht wird, und mit deren anderes Endes mit solchem metallischen Längsdraht (44) verbunden sind, der von den seitlichen Kanten des Rostes (29) durch solche senkrechte Nuten (25, 26) der Trägegabel (19, 20) springt vor.

## Revendications

1. Appareil pour griller des aliments, notamment de la viande, des poissons, etc.., comprenant au moins une grille métallique (29) adaptable dans une correspondante enveloppe en forme de boîte (4), ouverte dans sa partie supérieure, et comprenant une ultérieure grille métallique (30) adaptable et articulée à ladite grille (29) lelong son bord longitudinal postérieur par des boutonnières métalliques (34, 35) réliées à ladite grille (29) ou par des charniéres etc.., de telle façon que les aliments à cuire soient renfermés entre ladite grille (29) et ladite ultérieure grille (30), ce dernière-ci étant pourvue au moins d'une poignée (38) réliée à un fil métallique (39) pourvu d'une part rectiligne allongée (40), introduisable dans des correspondantes boutonnières métalliques (41) fixées le long du bord longitudinal antérieur de ladite ultérieure grille (30), ladite part rectiligne allongée (40) étant pourvue des pièces de fil métallique (42, 43) aptes à s'engager réciproquement avec des boutonnières métalliques (36, 37) pourvues le long du bord longitudinal antérieur de ladite grille (29), dans la position où ladite ultérieure grille (30) est superposée sur ladite grille (29), ladite grille (29) étant aussi pourvue d'un fil métallique longitudinal (44) fixé aux points centraux de ses bords latéraux, caractérisé par deux fourches de support (19, 20) appliquées sur les surfaces latérales de ladite enveloppe en forme de boîte (4) pour supporter les deux grilles (29, 30), lesdites fourches de support (19, 20) comprenant respectivement un élément de fourche plus long (22, 24) parallèle et légèrement espacé d'un élément de fourche plus court (21, 23), de façon à constituer des correspondantes rainures verticales (25, 26), et par une couple des bras métalliques (47, 48) joints respectivement à l'une de leur extrémités à la respective estrémité libre desdits éléments de fourche plus longs (22, 24), pour renverser les deux grilles (29, 30) et les aliments renfermés entre elles, lorsque la poignée (38) est tournée et joints à l'autre leur extrémité avec ledit fil métallique longitudinal (44), qui fait saillie des bords latéraux de la grille (29) à travers lesdites rainures verticales (25, 26) des fourches (19, 20).
